# EUROPEAN PATENT SPECIFICATION

(11) **EP 2 476 034 B1**
(45) Date of publication and mention of the grant of the patent: **01.06.2016**
(21) Application number: 10755097.2
(22) Date of filing: 07.09.2010
(51) Int. Cl.: G05D 1/00

(54) **SYSTEM AND METHOD FOR THE SAFE REMOTE CONTROL OF VEHICLES**
SYSTEM UND VERFAHREN ZUR SICHEREN FERNSTEUERUNG VON FAHRZEUGEN
SYSTÈME ET PROCÉDÉ POUR TÉLÉCOMMANDER DES VÉHICULES EN TOUTE SÉCURITÉ

(30) Priority: 07.09.2009 DE 102009040221
(43) Date of publication of application: 18.07.2012
(73) Proprietor: Deutsche Telekom AG, 53113 Bonn (DE)
(72) Inventor: QUADE, Michael, 53340 Meckenheim (DE)
(74) Representative: Cohausz Hannig Borkowski Wißgott
(86) International application number: PCT/EP2010/005479
(87) International publication number: WO 2011/026652

(56) References cited:
- DE-A1- 19 731 749
- US-A1- 2005 227 684
- US-B1- 6 778 097

## Description

The invention relates to a system and a method for the remote control of vehicles, wherein a video that is recorded by at least one video camera is transmitted in real time from a remote-controlled vehicle, via at least one mobile radio link over a mobile radio network, to a control center, and the received video is displayed in the control center, the control center receiving control commands from an operator, and transmitting these control commands via the same or at least one further mobile radio connection over the mobile wireless network to the remote-controlled vehicle, the control commands being executed by the remote-controlled vehicle.

A method for remote control of constructions machines is disclosed in US patent 6778097 B1 wherein the remote control is established by a direct radio link via directional antennas using 50 GHz transmission frequency and a simple radio unit. When communication by the 50 GHz simple radio unit is interrupted a control signal to the construction machine is transmitted by a radio wave of 429 MHz band to retract or recover the construction machine to a safe place.

Self-steering motor vehicles are currently not usable in road traffic due to the complex relationships. However, there is a great need for unmanned vehicles on account of the great potential cost and time savings. In addition, vehicles for the transport of goods may be more efficiently designed when they are unmanned.

For cranes, hoists, etc. it is known that a machine operator operates the equipment by wireless remote control. It is disadvantageous that the machine operator must have constant visual contact with the equipment being operated. This disadvantage can be overcome by using a camera mounted on the equipment that records and transmits video images of the point of view of the remote-controlled equipment.

Furthermore, it is known to use a mobile radio link over a mobile radio network for the transmission of the video images and control commands for a remote-controlled vehicle. In the case of a disturbance and/ or interruption of the mobile radio connection the video signal is lost so that the operator is no longer able to see where to the vehicle is driving. Additionally, control commands will not reach the vehicle properly so that it is not possible to control it anymore. A risk and danger that the vehicle will become damaged and/ or the rudderless vehicle itself damages other objects on his route is inevitable. A disturbance of the mobile radio connection may occur if the vehicle enters an area of reduced mobile radio service supply. An interruption of the connection may occur if the vehicle enters an area in which no mobile radio coverage is available.

Therefore, the object of the invention is to provide a method and a system for the remote control of vehicles which on the one hand ensure a high level of safety, and on the other hand allow the vehicle to be remotely controlled without the need for the vehicle driver to have visual contact with the controlled vehicle.

This object is achieved by a method according to claim 1, and by a system according to claim 9. Advantageous further developments of the invention are given in the dependent claims.

According to the invention it is proposed a method for the remote control of vehicles , in which a video that is recorded by at least one video camera is transmitted in real time from a remote-controlled vehicle, via at least one mobile radio link over a mobile radio network, to a control center, and the received video is displayed in the control center, the control center receiving control commands from an operator, and transmitting these control commands via the same or at least one further mobile radio connection over the mobile wireless network, to the remote-controlled vehicle, the control commands being executed by the remote-controlled vehicle, wherein an operation and maintenance center detects and supervises areas of unavailable and/ or reduced mobile radio service supply, and a navigation system provides route recommendations to the control center to drive around route sections without sufficient mobile radio service supply, using current mobile radio service supply data provided by the operation and maintenance center.

Under current mobile radio communication standards, video transmissions, among others, in very good quality are possible in real time due to the very large data bandwidth. One example of such a mobile wireless standard is long-term evolution (LTE), the use of the invention not being limited to this mobile wireless standard.

It has to be understood that a route recommendation according to the invention is not restricted to asphalted or paved streets. Moreover, a route can be any way to a destination via ordinary streets, unasphalted/ unpaved areas like construction areas, fields or mines, as well as ways over the water or ways through the air. Furthermore, the terms "vehicle" and "drive around route sections" are not intended to be understood in a limited way. According to the invention a vehicle can be any means that is possible to be moved ashore, on the water or in the air. In this sense, vehicles and the like include in particular land, water, and air vehicles, as well as road vehicles, commercial vehicles, rail vehicles, rail-shunting vehicles, and also hoists, cranes, construction vehicles, and the like.

A reduced mobile radio service supply according to the invention manifests in a bad quality of a mobile radio connection, i.e. in any temporary and/ or local disturbance of the radio link. Furthermore, maintenance work, overload situations or technical failures can cause local and temporary unavailability of the mobile radio service. Additionally, ordinary geographical borders of the mobile radio network beyond which the mobile radio service decreases gradually, have to be considered for the remote-control of a vehicle. According to the invention the aforementioned static and dynamic situations and status of the availability and quality of mobile radio service in a temporal and spatial resolution are detected and supervised by the operation and maintenance center. Measures planned in advance on the mobile wireless network, such as construction or removal of sites and planned maintenance, may be taken into account in the planning of the route of the vehicle.

It is particularly advantageous that a mobile radio standard, i.e., data transmission via a mobile wireless connection over a mobile radio network, is used which is widespread and ensures good availability. One use for such a mobile radio standard is thus the remote control of motor vehicles, in which all required data and video signals are transmitted from the vehicle to a central control site.

The actions and control commands carried out by the operator, i.e., a "virtual" driver, are transmitted back to the vehicle. Therefore, the control site does not have to have a spatial relationship with the vehicle. The control site, i.e. the control center may even be located in another country or on another continent. As the result of standardizing the control site, operation of a vehicle may be directly transferred from one virtual driver to another virtual driver, so that the vehicle may remain in continuous operation.

For the data exchange, specific quality parameters are preferably satisfied, for example a minimum data rate, minimum reaction time, minimum round trip time, etc., to ensure the greatest possible safety. If a certain quality parameter falls below at least one of said border values, this indicates a reduced quality of the mobile radio link, and, having detected said quality reduction, adequate measures to ensure safe control of the vehicle can be initiated. However, a prerequisite is sufficient mobile radio coverage in the areas in which the vehicle is remote-controlled.

The operation and maintenance center is preferably arranged in such a way that any local and temporal disturbance, interruption, and/or impairment of service quality of the mobile radio connection is detected and areas of unavailability of mobile service due to maintenance and repair work, overload situations or borderlines are supervised. The remote-controlled vehicle is preferably stopped if a reduction or interruption of the mobile radio service supply is detected on the travelled route ahead or if a disturbance and/or interruption of the mobile wireless connection is detected. Preferably, the vehicle is stopped immediately.

In a preferred embodiment, the remote-controlled vehicle is shut down until a new mobile radio link is established via the mobile radio network, via another mobile radio network and/or until a direct manual actuation of the remote-controlled vehicle is carried out. The greatest possible safety is thus ensured when the vehicle is automatically stopped, i.e., braked and shut down, when the remote control connection is interrupted or heavily disturbed.

In the case of insufficient mobile radio service supply on the route to be travelled it is advantageous to switch to another mobile radio connection, mobile radio network and/or to a different mobile radio communication technology, wherein video transmission and / or remote-control transmission is continued over said other mobile radio connection, other mobile radio network, and/ or mobile radio communication technology and/ or mobile radio standards.

Preferably, the current position and a travelled direction of the vehicle is determined by the navigation system. This can be implemented by location finding or triangulation the position of the vehicle. The travelled direction of the vehicle can be determined by analyzing the change of the position. In an alternative embodiment or additionally the vehicle may have a GPS locator (Global Positioning System) that determines the position of the vehicle satellite-based. The position and travelled direction can then be provided to the navigation system which, on the basis of the position and moving direction of the vehicle, calculates a route recommendation to drive around route sections without sufficient mobile radio service supply, in due consideration of the current mobile radio service supply data.

Furthermore, the current position of the vehicle can be transmitted via the mobile radio link to the control center where the way of motion of the vehicle can be supervised.

According to the invention it is furthermore proposed a system for the remote control of vehicles, the system comprising a remote-controllable vehicle having at least one video camera, and comprising a mobile radio network and a control center, a video recorded by the camera can be transmitted in real time via at least one mobile radio connection over the mobile radio network to the control center, and the received video can be displayed in the control center, the control center being set up to receive control commands from an operator and to transmit these control commands via the same or at least one further mobile radio link, over the mobile radio network, to the remote-controlled vehicle, the system further comprising an operation and maintenance center being set up to detect and supervise areas of unavailable and/ or reduced mobile radio service supply, and a navigation system being set up to provide route recommendations to the control center to drive around route sections without sufficient mobile radio service supply, using current mobile radio service supply data provided by the operation and maintenance center.

The mobile wireless connection used is preferably one or more broadband connections. The use of broadband connections ensures the highest possible data rate.

Preferably, a database with route network information is a component of the navigation system. The navigation system may be directly integrated into the system, i.e., may form an integral component of the system. Alternatively, an external navigation system may be linked to the system, and the navigation data may be correspondingly provided. The navigation system can be satellite-based.

In a particularly preferred embodiment of the invention, the navigation system, based on the mobile radio service supply data provided by the operation and maintenance center, identifies route segments of the route network without any or without sufficient mobile radio coverage/ mobile radio service, and blocks those route segments which then are bypassed with the assistance of the navigation system. Thus, it is particularly advantageous that spatial and temporal disturbances of the mobile wireless network result in route blockages, and the greatest possible safety may thus be ensured. It may thus be ensured that the remote-controlled vehicles are driven only in areas in which adequate, i.e., sufficiently good, mobile radio coverage and service exists. When mobile radio coverage is lacking or inadequate automatic braking can be carried out.

These recommended routes and route sections are stored in the navigation system, and made available to the operator. The navigation system which is integrated into the system will thus compute a route which meets the requirements; i.e., only routes having adequate mobile radio coverage are used. Alternatively, the route meeting this requirement can be calculated at a central instance, in particular at the control center.

In the preceding process the usable routes may be determined using a computerized method. Alternatively, ray tracing methods, building/roof topologies, and geographical data, among others, may be used for navigation. Ray tracing is primarily a method for the computation of concealment, i.e., for determining the visibility of objects from the eye point. The meaning intended here is the mobile radio availability at a particular location. Detailed measurement runs along the primary transportation network represent another option for determining the usable routes.

However, due to technical disturbances or planned revisions, the mobile wireless network may be temporarily unavailable for areas previously provided with service, or have limited availability. These disturbances are detected by the network provider, using so-called operation and maintenance centers (OMCs) for telecommunication networks. The purpose of the OMC is to ensure the operation of the network. In addition, the exact location of the disturbance may be determined by linking the OMC systems via an appropriate database or application.

In a preferred embodiment of the invention, this disturbance information is spatially and temporally assigned to routes of the transportation network stored in the database and being useable by the remote-controlled motor vehicles. The service disturbance and availability information are provided to the navigation system in the form of route blockages. The virtual driver/ operator is not allowed to travel on these blocked routes. However, if such a route is traveled anyway, various automatic actions are carried out by the system.

In one simple design, the motor vehicle is automatically fully braked by the motor vehicle itself, which may also be carried out when a disturbance or interruption of the mobile radio connection is detected. In one alternative specific embodiment, the vehicle may stop autonomously on the roadside. In both cases, continued travel is not possible until the mobile wireless coverage is once again available, or the motor vehicle is manually operated on-site.

In one embodiment, the navigation system is preferably used to determine the current position of the vehicle and to transmit this information to the control center via the mobile radio connection. In this manner the current position of the remote-controlled vehicle is known in the control center at all times.

For safety reasons the components of the system may be redundantly designed. For example, several mobile radio links can be maintained at all times between the remote-controlled vehicle and the control center. Furthermore, different mobile radio technologies and/or mobile radio standards can be used in parallel for establishing the several mobile radio links. Furthermore, the vehicle may have multiple video cameras, in particular, two video cameras. A further advantage of this specific embodiment it that a stereoscope video capturing is possible thus giving the operator of the vehicle the feeling to have a driving seat on the vehicle.

In addition to one or more video cameras, additional sensors may be integrated into the vehicle, such as for example one or more microphones, an infra-red camera with or without additional infra-red light, a radar, a LIDAR (Light Detection and Ranging), distance sensors, one or more microwave sensors, one or more ultrasonic sensors, and the like, the data of which are likewise transmitted via the mobile radio connection to the control center and displayed at that location.

In the above context, the term "parallel" is understood to mean that multiple mobile wireless communication technologies are used simultaneously or consecutively, in the sense that the system supports and is able to use multiple standards and always uses the mobile radio standard like LTE (Long Time Evolution), UMTS (Universal Mobile Telecommunication System), GSM (Global System for Mobile Communication) and the like which is available at that moment, or that at a given moment the system always uses the standard which provides the largest bandwidth. The availability and coverage may be increased by the support and use of different mobile wireless technologies at the same time.

In one preferred specific embodiment of the system, multiple remote-controlled vehicles are interlinked via wireless connections by means of the air interface, and the data traffic of a few remote-controlled vehicles is transmitted to the control center via the mobile wireless connection of one of the interlinked vehicles.

The term "data traffic" is understood to mean, on the one hand, the transmission of the video images from the remote-controlled vehicle to the control center, and on the other hand, the transmission of the control commands from the control center to the remote-controlled vehicle.

Thus, in this aspect of the system, communication from vehicle to vehicle via wireless connections between the vehicles is possible, whereby the last vehicle in such a chain is able to communicate with the mobile radio network. Areas without any mobile radio network service or with reduced mobile radio network service may be bridged in this manner.

However, when the system is used on factory premises or inside a production building, for example, the public mobile radio network may be supplemented by using a so-called "repeater" to provide service to areas which per se are not covered by the mobile radio network. Repeaters in telecommunication networks are most often referred to as "regenerators," and are used in telecommunication networks, similarly as in practically all other networks, for increasing coverage range. In the mobile radio sector, repeaters are used as relay stations for "illuminating" shaded areas, for example the interior of buildings or the like.

Thus, preferred areas of application of the system are heavy-duty vehicles, as well as passenger vehicles and other movable mechanical objects such as cranes, hoists, rail-shunting vehicles, and the like.

In a preferred embodiment of the invention the mobile radio resources for vehicle control along the planned or possible route are prioritized. This means that a priority is assigned to the mobile radio link over which the video images and the control commands are transmitted, the priority being higher than for other subscribers within the mobile radio network. This ensures that in local and/ or temporal overload or emergency situations the remote-controllability of the vehicle is still maintained.

Preferably, the entire system, including the control of the vehicle, is implemented in a dynamic service and resource directory so that disturbances of the overall system may be associated geographically with the vehicle and with the position of the vehicle.

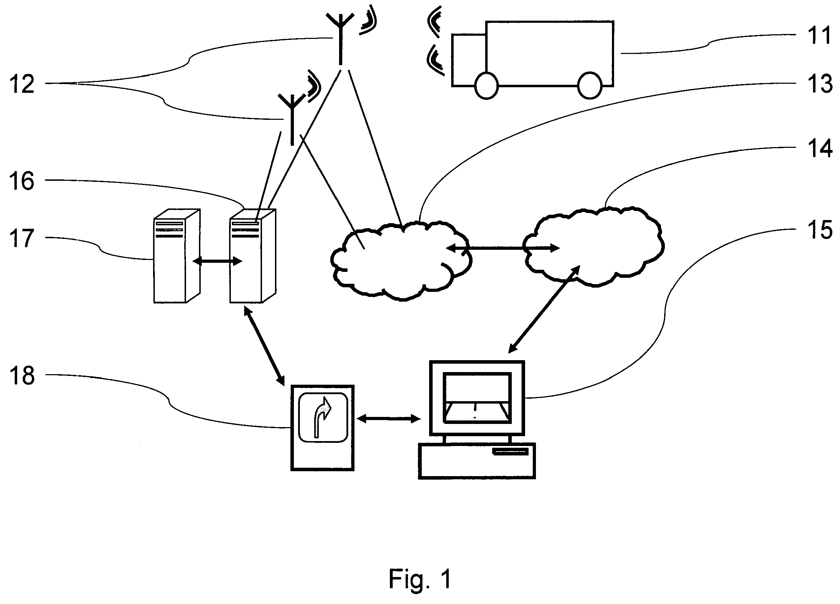

Figure 1 illustrates a diagram of the system according to the invention for the safe remote control of motor vehicles via a mobile radio network.

The remote-controlled vehicle 11 has an integrated video camera whose signal is transmitted via the mobile radio network 13 to the control center 15 and is displayed at that location to an operator. The remote-controlled motor vehicle 11 is connected via a mobile radio connection which is maintained via the mobile radio network antennas 12, over the mobile wireless network 13. The connection continues from the mobile radio network 13 to the control center 15 via a wired network 14, e.g. the internet and/or an intranet 14.

The control center 15 is linked to a maintenance and monitoring system 16 of the network provider, referred to as the operation maintenance center 16 (OMC). Any lack of service, disturbances or planned revisions of the mobile radio network 13 are monitored by this OMC system 16 in a spatial and temporal resolution.

This OMC system 16 in turn is linked to a further server 17 which administrates and monitors a dynamic service and resource directory in order to identify currently available route and radio resources which may be accessed.

Associated with the control center 15 is a navigation system 18 which communicates with the maintenance and operating system 16 and the service and resource directory 17 in order to compute an available route which is recommended by the navigation system.

The available route is provided by the navigation system 18 to the operator at the control center 15, so that the vehicle 11 may be remote-controlled, starting from the control center 15, via the wired network 14 and further via the mobile radio network 13, by relaying the corresponding control commands from the mobile radio network antennas 12 via the mobile radio connection and to the remote-controlled motor vehicle 11.

Continuous monitoring is possible due to the fact that the video image of the motor vehicle 11 is displayed at the control center 15 at all times.

List of reference numerals:
- 11: Remote-controlled vehicle
- 12: Mobile Radio network antennas
- 13: Mobile Radio network
- 14: Wired Network, Internet and/or intranet
- 15: Control Center
- 16: Operational Maintenance Center (OMC) (monitoring and maintenance system)
- 17: Service and Resource directory (association of the geographical mobile wireless locations, among other things, with a network element identifier)
- 18: Navigation System

## Claims

1. Method for the remote control of vehicles (11), in which a video that is recorded by at least one video camera is transmitted in real time from a remote-controlled vehicle (11), via at least one mobile radio link over a mobile radio network (13), to a control center (15), and the received video is displayed in the control center (15), the control center (15) receiving control commands from an operator, and transmitting these control commands via the same or at least one further mobile radio connection over the mobile wireless network (13), to the remote-controlled vehicle (11), the control commands being executed by the remote-controlled vehicle (11), **characterized in that** an operation and maintenance center (16) detects and supervises areas of unavailable and/ or reduced mobile radio service supply, and that a navigation system (18) provides route recommendations to the control center (15) to drive around route sections without sufficient mobile radio service supply, using current mobile radio service supply data provided by the operation and maintenance center (16).

2. Method according to Claim 1, **characterized in that** the remote-controlled vehicle (11) is stopped if a reduction or interruption of the mobile radio service supply is detected on the travelled route ahead or if a disturbance and/or interruption of the mobile wireless connection is detected.

3. Method according to Claim 2, **characterized in that** the remote-controlled vehicle (11) is shut down until a new mobile radio link is established via the mobile radio network (13), via another mobile radio network and/or until a direct manual actuation of the remote-controlled vehicle (11) is carried out.

4. Method according to one of the preceding claims, **characterized in that** in the case of insufficient mobile radio service supply on the route to be travelled it is switched to another mobile radio network and/or to a different mobile radio communication technology, and that video transmission and / or remote control is continued over said other mobile radio network and/ or mobile radio communication technology and/ or mobile radio standards.

5. Method according to one of the preceding claims, **characterized in that** the current position and a travelled direction of the vehicle (11) is determined by the navigation system (18) or is provided to the navigation system (18) on the basis of which a route recommendation is calculated.

6. Method according to one of the preceding claims, **characterized in that** the current position of the vehicle (11) is transmitted via the mobile radio link to the control center (15).

7. Method according to one of the preceding claims, **characterized in that** several mobile radio links are maintained between the remote-controlled vehicle (11) and the control center (15).

8. Method according to claim 7, **characterized in that** different mobile radio technologies are used in parallel for the several mobile radio links and/ or mobile radio standards.

9. System for the remote control of vehicles (11), the system comprising a remote-controllable vehicle (11) having at least one video camera, and comprising a mobile radio network (13) and a control center (15), a video recorded by the camera can be transmitted in real time via at least one mobile radio connection over the mobile radio network (13) to the control center (15), and the received video can be displayed in the control center (15), the control center (15) being set up to receive control commands from an operator and to transmit these control commands via the same or at least one further mobile radio link, over the mobile radio network (13), to the remote-controlled vehicle (11), **characterized by**
- an operation and maintenance center (16) being set up to detect and supervise areas of unavailable and/ or reduced mobile radio service supply and
- a navigation system (18) being set up to provide route recommendations to the control center (15) to drive around route sections without sufficient mobile radio service supply, using current mobile radio service supply data provided by the operation and maintenance center (16).

10. System according to claim 9, **characterized in that** the mobile radio link or the mobile radio links is a/ are broadband connection(s).

11. System according to one of the claims 9 or 10, **characterized in that** the navigation system (18) is satellite-based.

12. System according to one of the claims 9 to 11, **characterized in that** the vehicle (11) has two cameras for a stereoscope video capturing and transmission.

13. System according to one of the preceding claims 9 to 12, **characterized in that** multiple remote-controlled vehicles (11) are interlinked via radio connections, in particular mobile radio connections, and that the data traffic of a few remote-controlled vehicles (11) is transmitted to the control center (15) via the mobile radio connection of one of the interlinked vehicles (11).

## Patentansprüche

1. Verfahren zum Fernsteuern von Fahrzeugen (11), bei dem ein Video, das durch wenigstens eine Videokamera aufgenommen wird, in Echtzeit von einem ferngesteuerten Fahrzeug (11) über wenigstes eine Mobilfunkverbindung über ein Mobilfunknetz (13) an ein Kontrollzentrum (15) übertragen wird, und bei dem das empfangene Video in dem Kontrollzentrum (15) angezeigt wird, wobei das Kontrollzentrum (15) Steuerbefehle von einer Bedienungsperson empfängt und diese Steuerbefehle über die gleiche oder wenigstens eine weitere Mobilfunkverbindung über das drahtlose Mobilfunknetz (13) an das ferngesteuerte Fahrzeug (11) überträgt, wobei die Steuerbefehle durch das ferngesteuerte Fahrzeug (11) ausgeführt werden, **dadurch gekennzeichnet, dass** ein Betriebs- und Wartungszentrum (16) Bereiche mit einer nicht verfügbaren bzw. verringerten Mobilfunkdienstversorgung detektiert und überwacht, und dass ein Navigationssystem (18) Routenempfehlungen für das Kontrollzentrum (15) bereitstellt, um unter Verwendung von aktuellen Daten über die Mobilfunkdienstversorgung, die durch das Betriebs- und Wartungszentrum (16) bereitgestellt werden, Routenabschnitte ohne ausreichende Mobilfunkdienstversorgung zu umfahren.

2. Verfahren nach Anspruch 1, **dadurch gekennzeichnet, dass** das ferngesteuerte Fahrzeug (11) angehalten wird, wenn eine Verringerung oder Unterbrechung der Mobilfunkdienstversorgung auf der geplanten Reiseroute detektiert wird oder falls eine Störung bzw. eine Unterbrechung der mobilen drahtlosen Verbindung detektiert wird.

3. Verfahren nach Anspruch 2, **dadurch gekennzeichnet, dass** das ferngesteuerte Fahrzeug (11) außer Betrieb genommen wird, bis über das Mobilfunknetz (13) oder über ein weiteres Mobilfunknetz eine neue Mobilfunkverbindung aufgebaut ist bzw. bis eine direkte manuelle Betätigung des ferngesteuerten Fahrzeugs (11) ausgeführt wird.

4. Verfahren nach einem der vorhergehenden Ansprüche, **dadurch gekennzeichnet, dass** im Fall einer nicht ausreichenden Mobilfunkdienstversorgung auf der zu fahrenden Route zu einem weiteren Mobilfunknetz bzw. zu einer anderen Mobilfunkkommunikationstechnologie umgeschaltet wird, und dass eine Videoübertragung bzw. eine Fernsteuerung über das andere Mobilfunknetz bzw. die andere Mobilfunkkommunikationstechnologie bzw. über Mobilfunkstandards fortgeführt wird.

5. Verfahren nach einem der vorhergehenden Ansprüche, **dadurch gekennzeichnet, dass** die aktuelle Position und eine Fahrtrichtung des Fahrzeugs (11) durch das Navigationssystem (18) bestimmt oder dem Navigationssystem (18) bereitgestellt werden, damit auf dieser Basis eine Routenempfehlung berechnet wird.

6. Verfahren nach einem der vorhergehenden Ansprüche, **dadurch gekennzeichnet, dass** die aktuelle Position des Fahrzeugs (11) über die Mobilfunkverbindung an das Kontrollzentrum (15) übertragen wird.

7. Verfahren nach einem der vorhergehenden Ansprüche, **dadurch gekennzeichnet, dass** mehrere Mobilfunkverbindungen zwischen dem ferngesteuerten Fahrzeug (11) und dem Kontrollzentrum (15) aufrechterhalten werden.

8. Verfahren nach Anspruch 7, **dadurch gekennzeichnet, dass** verschiedene Mobilfunktechnologien für die mehreren Mobilfunkverbindungen bzw. Mobilfunkstandards parallel verwendet werden.

9. System für die Fernsteuerung von Fahrzeugen (11), wobei das System ein fernsteuerbares Fahrzeug (11) mit wenigstens einer Videokamera umfasst und wobei das System ein Mobilfunknetz (13) und ein Kontrollzentrum (15) umfasst, wobei ein Video, das durch die Kamera aufgenommen wird, in Echtzeit über wenigstens eine Mobilfunkverbindung über das Mobilfunknetz (13) an das Kontrollzentrum (15) übertragen werden kann und wobei das empfangene Video in dem Kontrollzentrum (15) angezeigt werden kann, wobei das Kontrollzentrum (15) eingerichtet ist, Steuerbefehle von einer Bedienungsperson zu empfangen und diese Steuerbefehle über das gleiche oder wenigstens eine weitere Mobilfunkverbindung über das Mobilfunknetz (13) an das ferngesteuerte Fahrzeug (11) zu übertragen, wobei das System **gekennzeichnet ist durch**:
- ein Betriebs- und Wartungszentrum (16), das so eingerichtet ist, dass es Bereiche mit einer nicht verfügbaren bzw. verringerten Mobilfunkdienstversorgung detektiert und überwacht; und
- ein Navigationssystem (18), das so eingerichtet ist, dass es Routenempfehlungen für das Kontrollzentrum (15) bereitstellt, um unter Verwendung von aktuellen Daten über die Mobilfunkdienstversorgung, die **durch** das Betriebs- und Wartungszentrum (16) bereitgestellt werden, Routenabschnitte ohne ausreichende Mobilfunkdienstversorgung zu umfahren.

10. System nach Anspruch 9, **dadurch gekennzeichnet, dass** die Mobilfunkverbindung oder die Mobilfunkverbindungen Breitbandverbindungen sind.

11. System nach einem der Ansprüche 9 oder 10, **dadurch gekennzeichnet, dass** das Navigationssystem (18) satellitengestützt ist.

12. System nach einem der Ansprüche 9 bis 11, **dadurch gekennzeichnet, dass** das Fahrzeug (11) zwei Kameras für eine stereoskopische Videoaufnahme und -übertragung aufweist.

13. System nach einem der vorhergehenden Ansprüche 9 bis 12, **dadurch gekennzeichnet, dass** mehrere ferngesteuerte Fahrzeuge (11) über Funkverbindungen, insbesondere über Mobilfunkverbindungen, miteinander verbunden sind und dass der Datenverkehr einiger ferngesteuerter Fahrzeuge (11) über die Mobilfunkverbindung eines der miteinander verbundenen Fahrzeuge (11) an das Kontrollzentrum (15) übertragen wird.

## Revendications

1. Procédé de télécommande de véhicules (11), selon lequel une vidéo enregistrée par au moins une caméra vidéo est transmise en temps réel depuis un véhicule télécommandé (11) jusqu'à un centre de commande (15) au moyen d'au moins une liaison radio mobile sur un réseau radio mobile (13), et la vidéo reçue est affichée dans le centre de commande (15), le centre de commande (15) recevant des instructions de commande émanant d'un opérateur et transmettant ces instructions de commande au véhicule télécommandé (11) au moyen de la même connexion radio mobile ou d'au moins une connexion radio mobile additionnelle sur le réseau radio mobile (13), les instructions de commande étant exécutées par le véhicule télécommandé (11), le procédé étant **caractérisé en ce qu'un** centre d'exploitation et de maintenance (16) détecte et supervise des zones de prestation de service radio mobile non disponible et/ou réduite, et **en ce qu'**un système de navigation (18) fournit des recommandations de parcours au centre de commande (15) dans le but de contourner des segments de parcours ne bénéficiant pas de prestation de service radio mobile suffisante, à partir de données actuelles de prestation de service radio mobile fournies par le centre d'exploitation et de maintenance (16).

2. Procédé selon la revendication 1, **caractérisé en ce que** le véhicule télécommandé (11) est stoppé en cas de détection d'une réduction ou d'une interruption de la prestation de service radio mobile sur le parcours emprunté à venir ou en cas de détection d'une perturbation et/ou d'une interruption de la connexion mobile sans fil.

3. Procédé selon la revendication 2, **caractérisé en ce que** le véhicule télécommandé (11) est mis à l'arrêt jusqu'à ce qu'une nouvelle liaison radio mobile soit établie au moyen du réseau radio mobile (13), au moyen d'un autre réseau radio mobile et/ou jusqu'à ce qu'un démarrage manuel direct du véhicule télécommandé (11) soit effectué.

4. Procédé selon l'une des revendications précédentes, **caractérisé en ce que,** en cas de prestation de service radio mobile insuffisante sur le parcours à emprunter, un basculement s'effectue sur un autre réseau radio mobile et/ou sur une technologie de communication radio mobile différente, et **en ce que** la transmission de la vidéo et/ou la télécommande se poursuivent/poursuit sur ledit autre réseau radio mobile et/ou ladite autre technologie de communication radio mobile et/ou d'autres normes radio mobiles.

5. Procédé selon l'une des revendications précédentes, **caractérisé en ce que** la position actuelle et une direction empruntée du véhicule (11) sont établies par le système de navigation (18) ou fournies au système de navigation (18), en fonction desquelles une recommandation de parcours est calculée.

6. Procédé selon l'une des revendications précédentes, **caractérisé en ce que** la position actuelle du véhicule (11) est transmise au centre de commande (15) au moyen de la liaison radio mobile.

7. Procédé selon l'une des revendications précédentes, **caractérisé en ce qu'une** pluralité de liaisons radio mobiles sont maintenues entre le véhicule télécommandé (11) et le centre de commande (15).

8. Procédé selon la revendication 7, **caractérisé en ce que** différentes technologies radio mobiles sont utilisées en parallèle pour la pluralité de liaisons radio mobiles et/ou de normes radio mobiles.

9. Système de télécommande de véhicules (11), le système comprenant un véhicule télécommandable (11) équipé d'au moins une caméra vidéo, et comprenant un réseau radio mobile (13) et un centre de commande (15), une vidéo enregistrée par la caméra étant susceptible d'être transmise en temps réel jusqu'au centre de commande (15) au moyen d'au moins une connexion radio mobile sur le réseau radio mobile (13), et la vidéo reçue est susceptible d'être affichée dans le centre de commande (15), le centre de commande (15) étant configuré pour recevoir des instructions de commande émanant d'un opérateur et pour transmettre ces instructions de commande au véhicule télécommandé (11) au moyen de la même liaison radio mobile ou d'au moins une liaison radio mobile additionnelle sur le réseau radio mobile (13), le système étant **caractérisé par**
- un centre d'exploitation et de maintenance (16) configuré pour détecter et superviser des zones de prestation de service radio mobile non disponible et/ou réduite, et
- un système de navigation (18) configuré pour fournir des recommandations de parcours au centre de commande (15) dans le but de contourner des segments de parcours ne bénéficiant pas de prestation de service radio mobile suffisante, à partir de données actuelles de prestation de service radio mobile fournies par le centre d'exploitation et de maintenance (16).

10. Système selon la revendication 9, **caractérisé en ce que** la liaison radio mobile ou les liaisons radio mobiles est/sont une/des connexion/connexions à large bande.

11. Système selon l'une des revendications 9 ou 10, **caractérisé en ce que** le système de navigation (18) est satellitaire.

12. Système selon l'une des revendications 9 à 11, **caractérisé en ce que** le véhicule (11) est équipé de deux caméras permettant une capture et une transmission de vidéo en stéréoscopie.

13. Système selon l'une des revendications 9 à 12 précédentes, **caractérisé en ce que** de multiples véhicules télécommandés (11) sont reliés entre eux au moyen de connexions radio, plus particulièrement de connexions radio mobiles, et **en ce que** le trafic de données de certains véhicules télécommandés (11) est transmis au centre de commande (15) au moyen de la connexion radio mobile d'un des véhicules (11) reliés entre eux.
